# EUROPÄISCHE PATENTANMELDUNG

(11) **EP 0 529 314 A2**
(43) Veröffentlichungstag der Anmeldung: **03.03.1993**
(21) Anmeldenummer: 92112658.7
(22) Anmeldetag: 24.07.1992
(51) Int. Cl.: G01B 11/04, G01N 21/86

(54) **Optische Messvorrichtung für Bandmaterial**

(30) Priorität: 28.08.1991 DE 9110653 U
(71) Anmelder: GPA Gesellschaft für Prozess-Automation mbH, D-22143 Hamburg (DE)
(72) Erfinder: Helms, Dirk, Dr.-Ing., W-2070 Ahrensburg (DE)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Optische Meßvorrichtung für Bandmaterial, insbesondere für die Breitenmessung von Stahlcordstreifen, mit einer Auflage für das Bandmaterial, einem in Querrichtung des Bandmaterials erstreckten und über dessen Ränder hinausragenden Schlitz der Auflage, das durchlaufende Bandmaterial an die Auflage anlegenden Leiteinrichtungen, einer den Schlitz von einer Seite beleuchtenden Lichtquelle und einem den Schlitz von der anderen Seite abtastenden optischen Sensor, wobei die Auflage eine in Querrichtung des Bandmaterials erstreckte, drehbar gelagerte und in Längsrichtung den Schlitz aufweisende Trommel ist, die Leiteinrichtungen das Bandmaterial an einem Umfangsabschnitt der Trommel anlegen und die Lichtquelle den Schlitz in diesem Umfangsabschnitt beleuchtet sowie der Sensor den Schlitz in diesem Umfangsabschnitt abtastet.

## Beschreibung

Gegenstand der Erfindung ist eine optische Meßvorrichtung für Bandmaterial nach dem Oberbegriff des Anspruches 1.

Vorliegende Erfindung zielt insbesondere auf die Breitenmessung von Bandmaterial während seines Durchlaufs unter Bedingungen ab, die optische Meßvorrichtungen einer beeinträchtigenden Verschmutzungsgefahr aussetzen. So stellt sich bei der Herstellung von Reifen für Kraftfahrzeuge die Aufgabe, die Breite von Stahlcordstreifen oder anderer bandförmiger Gummiprodukte während der Fertigung fortlaufend zu messen.

Diese Messung wird zum einen mit mechanischen Tastern durchgeführt, die sich an den Rand der Streifen oder Bänder anlegen. Mechanisch abtastende Meßverfahren sind jedoch bei hohen Bandgeschwindigkeiten ungeeignet, da dabei Schwingungen auftreten können, die das Meßergebnis verfälschen. Zum Teil sind die Bandränder auch ausgezackt, wodurch das mechanische Abtasten gestört und teilweise gar nicht angewendet werden kann.

Zum anderen gibt es die optische Vermessung, bei der Auflicht- oder Durchlichtverfahren zur Anwendung kommen. Beim Auflichtverfahren wird eine quer zur Längsrichtung des Bandes verlaufende Linie beleuchtet und von einer elektronischen Kamera abgetastet. Die Reflexionsunterschiede zwischen der Bandunterlage und dem Band werden von der Kamera erfaßt und elektronisch ausgewertet.

Die Erfindung bezieht sich auf das Durchlichtverfahren, bei dem eine Lichtquelle von der Kamera aus gesehen hinter dem zu vermessenden Band angeordnet ist, so daß das Band als Schatten in die Kamera abgebildet wird. Dafür wird das Bandmaterial über eine Auflage gezogen, die an der Meßstelle einen Schlitz aufweist. Für eine ausreichende Meßsicherheit ist erforderlich, daß das Band im Bereich der Meßstelle eng an der Auflage anliegt und dadurch Flatterbewegungen oder die Ausbildung von Wellen vermieden werden.

Die optischen Verfahren haben den Nachteil, daß die Auflagefläche des Bandes insbesondere an den Schlitzrändern und die Lichtquelle im Laufe der Zeit verschmutzen und sich damit die Kontrastverhältnisse so ändern, daß Meßfehler auftreten. Zum Teil ist die Verschmutzung dadurch bedingt, daß das Band infolge mechanischer Reibung Abrieb hinterläßt. Überdies ist das Glätten des Bandmaterials im Schlitzbereich mittels Leiteinrichtungen problematisch.

Davon ausgehend liegt der Erfindung die Aufgabe zugrunde, eine verbesserte Meßvorrichtung der eingangs genannten Art zu schaffen, die weniger störanfällig ist, insbesondere eine geringere Verschmutzungsempfindlichkeit aufweist.

Die Lösung dieser Aufgabe ist im Anspruch 1 angegeben. Vorteilhafte Ausgestaltungen sind den Unteransprüchen 2 bis 15 entnehmbar.

Die erfindungsgemäße Meßvorrichtung verwendet als Auflage eine drehbar gelagerte und geschlitzte Trommel, an der das Bandmaterial in einem Umfangsabschnitt zur Anlage gebracht wird. Während das Bandmaterial auf der Trommel abläuft, tritt der Schlitz periodisch in den beleuchteten Umfangsabschnitt ein. In diesem Moment kann Licht austreten, wobei das Bandmaterial einen Schatten wirft, der in bekannter Weise vom optischen Sensor erfaßt und ausgewertet wird. Die Trommel rollt auf dem durchlaufenden Bandmaterial ab, so daß mit der mechanischen Reibung ein entscheidender Einflußfaktor für nachteilige Verschmutzung an der Meßstelle praktisch entfällt. Ferner bewirkt das Anlegen des Bandmaterials auf dem Umfangsabschnitt der Trommel, wobei es den Schlitz überspannt, eine Glättung seiner Oberfläche, so daß die Bandbreite praktisch störungsfrei erfaßt werden kann.

In der Praxis wird man die Meßvorrichtung bevorzugt in einem Produktionsprozeß integrieren, in dem das Bandmaterial horizontal insbesondere zum Scheitel der Trommel geführt und an diese über einen Umfangswinkel von etwa 90° gelegt wird. Die Leiteinrichtungen können eine vorzugsweise drehbar gelagerte Hilfsrolle haben, die parallel zur Trommel ausgerichtet ist, um das Bandmaterial von dieser wegzuführen. Für glatte Anlage des Bandmaterials auf der Trommel ist gesorgt, wenn das Band in Durchlaufrichtung leicht gespannt wird, z.B. durch einen Antrieb insbesondere der Hilfsrolle.

Eine Weiterbildung sieht vor, daß sich die Meßstelle an einem von der Vertikalen durch die Trommelachse abweichenden Ort des Umfangsabschnittes befindet, z.B. in einem Winkelabstand von ungefähr 60°. Infolgedessen brauchen Lichtquelle und Sensor nicht in einer Vertikalen durch die Meßstelle ausgerichtet zu sein, so daß deren Verschmutzungsschutz und Positionierung erleichtert werden. Wird die Lichtquelle vorzugsweise in Form einer stabförmigen Lampe in die Trommel fest eingebaut, so ist sie bereits weitgehend gegen Staub geschützt. Zusätzlich kann die Lichtquelle von einer zwischen dieser und der Trommel angeordneten Maske vor Verunreinigungen geschützt sein. Zur weiteren Verbesserung der Sicherheit gegen das Eindringen von Staub kann die Trommel mit einer Luftleitung für eine Frischluftspülung mittels einer Pumpe versehen sein. Wird eine Druckluftpumpe angeschlossen, verhindert der Überdruck das Eindringen von Staubpartikeln in die Maske und die Trommel. Versorgungsleitungen für Lampe und Frischluftspülungen werden bevorzugt durch eine feststehende Achse für die drehbare Trommellagerung geführt.

Sind auf dem Trommelumfang mehrere Schlitze angeordnet, ist die Bandbreite in geringeren Längenabständen des Bandmaterials erfaßbar. Ein weiterer Vorteil der Meßvorrichtung besteht darin, daß durch Abzählen der Anzahl der vom Sensor gemessenen Lichtbänder eine Längenmessung des durchlaufenden Bandes vorgenommen werden kann, wobei der bekannte Trommelumfang und die Anzahl der Schlitze darauf berücksichtigt werden müssen. Auf diese Weise können mit der Meßvorrichtung sowohl die Bandbreite, als auch die durchlaufenden Bandlängen exakt vermessen werden und zwar unter extrem staub- und schmutzbelasteten Produktionsbedingungen.

Der optische, vorzugsweise optoelektronische Sensor kann eine handelsübliche CCD-Zeilen-Kamera sein. Weitere Einzelheiten und Vorteile des Gegenstandes der Erfindung ergeben sich aus der nachfolgenden Beschreibung der zugehörigen Zeichnung, die eine bevorzugte Ausgestaltung in teilweise geschnittener, schematisierender Perspektivdarstellung zeigt.

Die Meßvorrichtung hat eine Trommel 1, die über ihren Umfang acht in Längsrichtung verlaufende Schlitze 2 gleichmäßig verteilt angeordnet hat. Typischerweise haben die Schlitze 2 einen Abstand von 50 mm und eine Breite von 5 mm. Die Trommel 1 weist ein Drehlager auf, welches jedoch nicht abgebildet ist.

Im Inneren der Trommel 1 ist eine stabförmige Lampe 3 angeordnet, deren elektrische Anschlußenden seitlich aus der Trommel herausgeführt sind. Die Lampe 3 ist von einer Maske 4 in Rohrform umgeben, die einen längsgerichteten Rohrschlitz 5 aufweist. Der Rohrschlitz 5 ist in einem Winkelabstand a von etwa 60 zu einer Vertikalen durch die Achse der Trommel 2 angeordnet. In diese Richtung schickt die Lampe 3 ein Lichtband 6 auf den Innenumfang der Trommel 1. Ferner ist die Maske 4 mit einer Luftleitung 7 für einen Pumpenanschluß verbunden, die eine Frischluftspülung des Masken- und Trommelinnenraumes bewirkt.

Etwa horizontal wird dem Scheitel der Trommel 1 ein Bandmaterial 8 zugeführt, welches über einen Umfangswinkel von etwa 90 auf einem Umfangsabschnitt der Trommel 1 anliegt. Von dieser ist das Bandmaterial 8 mittels einer parallelen Hilfsrolle 9 etwa in horizontaler Richtung weggeführt.

Die Trommel 1 rollt auf dem Bandmaterial 8 ab, wobei die Schlitze 2 periodisch in das Lichtband 6 der Lampe eintreten, so daß dieses außerhalb der Ränder des Bandmaterials 8 aus der Trommel 1 heraustreten kann. Außerhalb der Trommel wird das die Breiteninformation des Bandmaterials 8 enthaltende Lichtband 6 von einer CCD-Kamera 10 erfaßt und hinsichtlich der Breite ausgewertet.

Soweit überhaupt Abrieb entsteht, wird er überwiegend von der Trommel 1 druckluftunterstützt abgeschleudert. Gegebenenfalls ins Trommelinnere gelangender Abrieb fällt unter die Lampe 3 und wird von der Maske 4 und deren Frischluftspülung von der Lampe 3 ferngehalten, so daß diese die Meßstelle konstant beleuchtet.

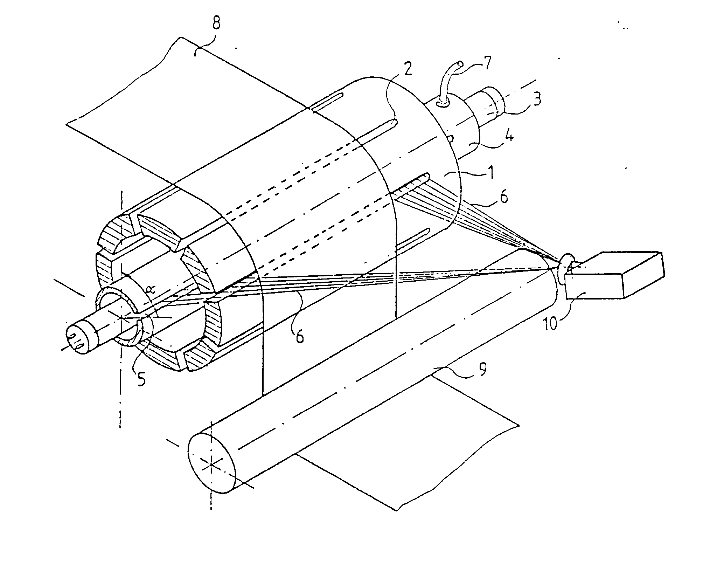

## Patentansprüche

1. Optische Meßvorrichtung für Bandmaterial, insbesondere für die Breitenmessung von Stahlcordstreifen, mit einer Auflage für das Bandmaterial, einem in Querrichtung des Bandmaterials erstreckten und über dessen Ränder hinausragenden Schlitz der Auflage, das durchlaufende Bandmaterial an die Auflage anlegenden Leiteinrichtungen, einer den Schlitz von einer Seite beleuchtenden Lichtquelle und einem den Schlitz von der anderen Seite abtastenden optischen Sensor, dadurch gekennzeichnet, daß die Auflage (1) eine in Querrichtung des Bandmaterials (8) erstreckte, drehbar gelagerte und in Längsrichtung den Schlitz (2) aufweisende Trommel (1) ist, die Leiteinrichtungen (9) das Bandmaterial an einem Umfangsabschnitt der Trommel anlegen und die Lichtquelle (3) den Schlitz (2) in diesem Umfangsabschnitt beleuchtet sowie der Sensor (10) den Schlitz in diesem Umfangsabschnitt abtastet.

2. Vorrichtung nach Anspruch 1, dadurch gekennzeichnet, daß das Bandmaterial (8) horizontal zur Trommel (1) geführt ist.

3. Vorrichtung nach Anspruch 1 oder 2, dadurch gekennzeichnet, daß der Umfangswinkel des Umfangsabschnittes an dem das Bandmaterial (8) an der Trommel (1) anliegt etwa 90 beträgt.

4. Vorrichtung nach einem der Ansprüche 1 bis 3, dadurch gekennzeichnet, daß die Leiteinrichtungen eine in Querrichtung des Bandmaterials (8) gerichtete Hilfsrolle (9) haben, um die das Bandmaterial (8) vom Umfangsabschnitt an dem es anliegt, von der Trommel (1) weggeführt ist.

5. Vorrichtung nach einem der Ansprüche 1 bis 4, dadurch gekennzeichnet, daß der Schlitz (2) an einer von einer Vertikalen durch die Achse der Trommel (1) abweichenden Meßstelle von der Lichtquelle (3) beleuchtet und im Sensor (10) abgetastet wird.

6. Vorrichtung nach Anspruch 5, dadurch gekennzeichnet, daß die Meßstelle um einen Winkelabstand (a) von etwa 60 von der Vertikalen abweicht.

7. Vorrichtung nach einem der Ansprüche 1 bis 6, dadurch gekennzeichnet, daß die Lichtquelle (3) in der Trommel (1) angeordnet ist und den Schlitz (2) von innen beleuchtet.

8. Vorrichtung nach einem der Ansprüche 1 bis 7, dadurch gekennzeichnet, daß die Lichtquelle eine stabförmige Lampe (3) ist.

9. Vorrichtung nach einem der Ansprüche 1 bis 8, dadurch gekennzeichnet, daß zwischen Lichtquelle (3) und Trommel (1) eine Maske (4) angeordnet ist, die zur Meßstelle auf dem Umfangsabschnitt hin eine Öffnung (5) aufweist.

10. Vorrichtung nach Anspruch 8 und 9, dadurch gekennzeichnet, daß die Maske (4) ein Rohr und die Öffnung ein Rohrschlitz (5) sind.

11. Vorrichtung nach einem der Ansprüche 1 bis 10, dadurch gekennzeichnet, daß die Trommel (1) eine Luftleitung (7) zu einer Pumpe für eine Frischluftspülung hat.

12. Vorrichtung nach Anspruch 11, dadurch gekennzeichnet, daß die Pumpe eine Druckluftpumpe ist.

13. Vorrichtung nach Anspruch 7 oder 11 oder die darauf bezogenen Ansprüche, dadurch gekennzeichnet, daß elektrische Anschlußenden der Lichtquelle (3), eine elektrische Versorgungsleitung für die Lichtquelle und/oder die Luftleitung (7) durch eine Achse für die drehbare Lagerung der Trommel (1) nach außen geführt sind.

14. Vorrichtung nach einem der Ansprüche 1 bis 13, dadurch gekennzeichnet, daß die Trommel (1) mehrere Schlitze (2) in Längsrichtung auf dem Umfang verteilt angeordnet hat.

15. Vorrichtung nach einem der Ansprüche 1 bis 14, dadurch gekennzeichnet, daß der optische Sensor eine CCD-Zeilen-Kamera (10) ist.
